# EUROPÄISCHE PATENTSCHRIFT

(11) **EP 0 860 188 B1**
(45) Veröffentlichungstag und Bekanntmachung des Hinweises auf die Patenterteilung: **05.12.2001**
(21) Anmeldenummer: 98102876.4
(22) Anmeldetag: 19.02.1998
(51) Int. Cl.: B01D 25/38, B01D 25/12

(54) **Filterpresse**
Filter press
Filtre-presse

(30) Priorität: 22.02.1997 DE 19707070
(43) Veröffentlichungstag der Anmeldung: 26.08.1998
(73) Patentinhaber: Erich Netzsch GmbH & Co. Holding KG, D-95100 Selb (DE)
(72) Erfinder: Derflinger, Franz, 4040 Linz (AT)

(56) Entgegenhaltungen:
- EP-B- 0 505 018
- WO-A-92/13624
- DE-A- 2 309 778
- DE-A- 3 247 818

## Beschreibung

Die Erfindung betrifft eine Filterpresse mit den Merkmalen des Oberbegriffs des Anspruchs 1.

Eine Filteranordnung dieser Art ist aus der DE 43 44 300 A1 bekannt. Hier sind in einem Pressengestell auf seitlichen Holmen mehrere Filterplatten parallel zueinander aufgehangen. Die Filterplatten sind während des Filtriervorgangs durch eine hydraulische Spannvorrichtung miteinander verspannt. Nach dem Filtriervorgang wird die Spannvorrichtung gelöst und die Filterplatten von einer halb- oder vollautomatisch arbeitenden Filterplattentransportvorrichtung auseinandergezogen. Die Filterplatten sind an beiden Seiten mit Filtertüchern belegt, die an ihrem oberen Ende mit einer Spreizvorrichtung in Verbindung stehen. Beide Schenkel der Spreizvorrichtung sind mit Federn versehen, die die Filtertücher von der Filterplatte abspreizen, sobald die Filterplattentransportvorrichtung Freiraum zwischen den angrenzenden Filterplatten geschaffen hat. Durch das Spreizen des Filtertuchs verlagert sich der Schwerpunkt des Filterkuchens, der sich dadurch vom Filtertuch löst.

Aus der DE 19 54 490 A1 ist eine Filterpresse bekannt, die mit Filterplatten und Filterrahmen bestückt ist. Zur Entfernung des Filterkuchens vom Filtertuch bzw. zur Entfernung von Resten des Filterkuchens streift ein Schaber an der Unterseite der Filterplatte, angebracht beim Anheben der Filterrahmen, über das Filtertuch. Somit befreit der Schaber aus Kunststoff, z.B. künstlichem Gummi, in einer Wischbewegung alle Filterkuchenreste, die, sollten sie am Filtertuch haften bleiben, zum Entweichen von Trübe an den Dichtflächen zwischen Filterrahmen und Filterplatten führen. Der wesentliche Teil des Filterkuchens löst sich bereits vom Filterrahmen, wenn dieser in abgesenkter Position unter dem Plattenpaket hängt und sich das endlose Filtertuch über Umlenkrollen bewegt.

Die DE 32 47 818 A 1 zeigt eine Filterpresse mit einer Vielzahl von Filterplatten. Jede der Filterplatten besitzt zwei Paar Abstreifvorrichtungen, die in einem Bereich unterhalb der Filterkammer fest angeordnet sind. Jede Abstreifvorrichtung besteht aus 2 zumeist plattenförmigen Elementen. Die Elemente begrenzen einen Schlitz, durch den die Filtertücher bewegt werden, um dabei die Filterkuchen abzustreifen. Nachdem die Abstreifvorrichtungen starr an den Filterplatten sitzen, müssen die Filtertücher bewegt werden, wozu die Filtertücher über Seile mit Aufwickelvorrichtungen oberhalb der Filterplatten verbunden sind. Bei jedem Entfernen der Filterkuchen müssen die Filtertücher zweimal den Schlitz der Abstreifvorrichtung durchlaufen, wodurch deren mechanische Beanspruchung verdoppelt wird. Die Anordnung von Auf-und Abwickelvorrichtungen, sowie der Abstreifvorrichtung an jeder Filterplatte erhöhen den mechanischen Aufwand und damit die Störungsanfälligkeit.

Der Erfindung liegt die Aufgabe zugrunde, das Ablösen von Filterkuchen von Filtertüchern mit Spreizvorrichtung zu verbessern.

Diese Aufgabe wird durch die kennzeichnenden Merkmale des Anspruchs 1 gelöst. Vorteilhafte Weiterbildungen gehen aus den kennzeichnenden Merkmalen der Unteransprüche hervor.

Der erfindungsgemäße Einsatz der Filterkuchenabschabevorrichtung ist vor allem beim Betrieb von Filterpressen mit Filtertuchspreizvorrichtungen vorteilhaft, sofern Medien filtriert werden, die zum stärkeren Anhaften am Filtertuch neigen. Hierbei bewirkt der dem Abstreifer auf der Rückseite des Filtertuchs zugeordnete Gegenhalter, der während der Auf- und Abwärtsbewegung mit gleicher Geschwindigkeit bewegt wird, ein verbessertes Ablösen des Filterkuchens bei gleichzeitiger Schonung des Filtertuchs.

In einer vorteilhaften Weiterbildung der Erfindung sind der Abstreifer und der Gegenhalter an einem Schabrahmen befestigt, der sich quer zur Längsachse der Filterpresse über das Filterplattenpaket erstreckt.

Diese Anordnung wird gewählt, wenn, wie aus dem Ausführungsbeispiel hervorgeht, Spreizvorrichtungen für die Filtertücher zum Einsatz kommen, die am oberen Rand der Filterplatten befestigt sind. Spreizt die Spreizvorrichtung die zu einer Filterplatte oder Filterkammer gehörenden Filtertücher, so öffnen sich Taschen zwischen der Filterplatte und dem Filtertuch. Da die Filtertücher beim Abschaben des Filterkuchens keine rückwärtige Unterstützung an den Filterplatten finden, würde sowohl das Filtertuch wie auch die Spreizvorrichtung einer unerwünschten Zugbelastung beim Abstreifen des Filterkuchens ausgesetzt.

Deshalb sitzt der Gegenhalter vorteilhafterweise an einer mit dem Schabrahmen verbundenen Halterung und kann sich, um auch die Belastung für die Halterung zu senken, zusätzlich während des Filterkuchenlösungsvorgangs an der Filterplatte abstützen. Bei beidseitigem Einsatz von Filtertüchern an den Filterplatten können die Gegenhalter auch eine Stabilisierungsfunktion zur Vermeidung von größeren Pendelbewegungen ausüben.

In einer weiteren vorteilhaften Ausgestaltung weist der Gegenhalter eine konvexe Oberfläche auf. Im Zusammenspiel von Gegenhalter und Schaber läßt sich der Ablösevorgang optimieren, wobei der Schaber je nach Konsistenz des Filterkuchens von 15° vor bis 15° nach dem Radiusgipfel des Gegenhalters an diesen ansetzt. Wobei schon alleine die Umlenkung des Filtertuchs um den Gegenhalter den Ablösevorgang einleitet bzw. unterstützt.

In einer weiteren vorteilhaften Ausgestaltung sind die Funktionen des Abschabens des Filterkuchens getrennt von der gleichzeitig stattfindenden Funktion Zwangsspreizen und Fixieren der Filterplatte an getrennten Vorrichtungsteilen befestigt.

Die erfindungsgemäße Filterkuchenabschabevorrichtung kann bei jedem Entleerungsvorgang automatisch zum Einsatz kommen oder abhängig davon, ob die Spreizbügel in Betätigungsstellung, also gespreizt, nach dem Öffnen der Filterkammer verharren, wobei angezeigt ist, daß sich der Filterkuchen nicht vom Filtertuch gelöst hat.

Im folgenden wird die Erfindung an einem Ausführungsbeispiel erläutert. Es zeigt
- Fig. 1: eine Filterpresse mit erfindungsgemäßen Abstreifern und Gegenhaltern
- Fig. 2: eine Teilansicht der Filterplatte mit entsprechender Fixierung
- Fig. 3: Platte mit Filterplattenfixierung und Spreizkeil
- Fig. 4: Seitenansicht der Kuchenabschabevorrichtung in Ruhestellung
- Fig. 5: Teilansicht der Kuchenabschabevorrichtung in Ruhestellung

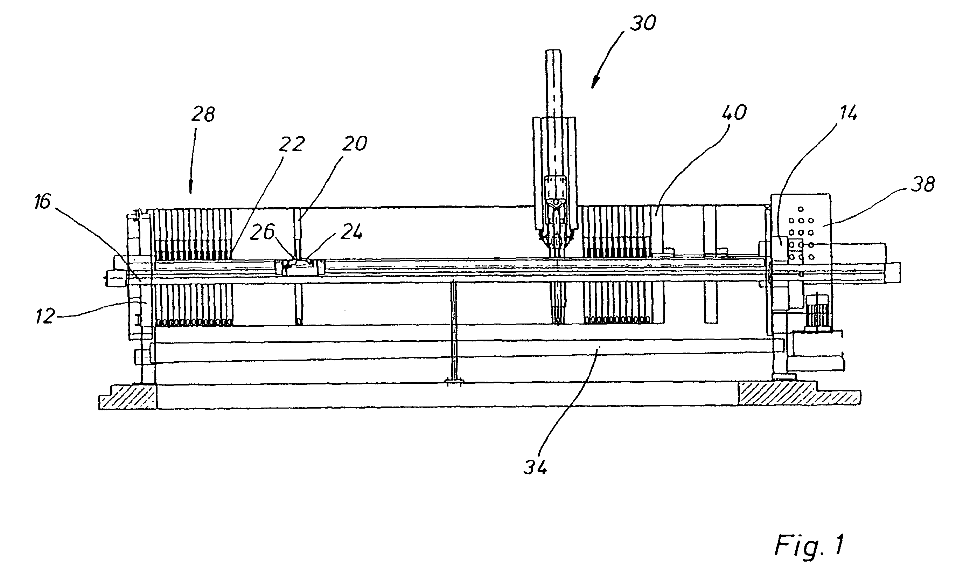

Die erfindungsgemäße Filterpresse mit entsprechender Filterkuchenabschabevorrichtung gemäß Fig. 1 besteht in ihren wesentlichen Grundbauteilen aus den beiden Pressenhäuptern 12, 14 und den beidseits längs der Filterpresse parallelen Holmen 16, 18, wovon nur der vordere Holm sichtbar ist. Auf den Holmen sind die Filterplatten 20, die aus Kunststoff oder Metall bestehen, aufgesetzt. Von den Filterplatten ragen seitlich von den Schmalseiten Arme 22 über die Filterplatte hinaus. An diesen Armen greift die automatisch arbeitende Filterplattentransportvorrichtung mit ihren Klinken 24, 26 an.

Beim Ausführungsbeispiel holt die Filterplattentransportvorrichtung gerade eine Filterplatte 20 vom links dargestellten Filterplattenpaket 28, in dem sich die Filterkuchen befinden, und schiebt sie zur Kuchenabschabevorrichtung 30.

Die Kuchenabschabevorrichtung überspannt mit ihrem gabelförmigen Rahmen den oberen Bereich der Filterplatten. Sie bewegt sich entweder auf parallelen Führungsschienen, die in Höhe der Holme oder oberhalb der Holme angeordnet sind, oder auf Führungen, auf denen die Filterplatten und/oder die Filterplattentransportvorrichtung entlang läuft. Unterhalb der Filterplatten sind Filtratableitbleche bzw. eine Filtratablaufwanne 34 mit den Pressenhäuptern verbunden. Diese Filtratablaufwanne 34 nimmt das Filtrat auf und schützt damit die unterhalb der Filterpresse über den Schacht in einen Behälter gelangten Filterkuchen vor Rückfeuchtung. Sämtliche Bewegungsabläufe und Vorgänge werden von der Steuerung 38 aus eingeleitet und kontrolliert. Der Antrieb der Filterplattentransportvorrichtung sowie der Pumpen erfolgt in diesem Fall elektrisch, der des Pressenzylinderantriebs elektrohydraulisch.

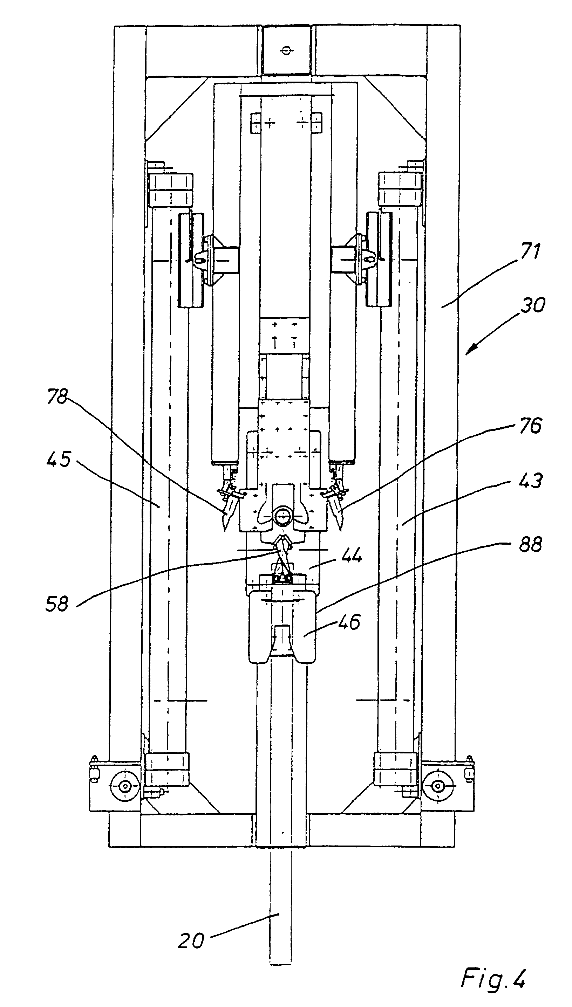

Aus Fig. 4 ist die Kuchenabschabevorrichtung 30 zu erkennen, die eine von der Filterplattentransportvorrichtung vom Filterplattenpaket 28 abgezogene vereinzelte Filterplatte 20 aufnimmt, wozu sie ihre Parkstellung zwischen der Schiebeplatte 40 und dem Pressenhaupt 14 verläßt.

Zur Vorbereitung auf das Entfernen des Filterkuchens 42 fährt die Kulisse 44, angetrieben von denselben Kolbenzylindereinheiten 43, 45, wie auch die Schaber, nach unten und fixiert damit die Filterplatte 20, indem die Enden der an der Kulisse 44 befestigten Platte 46 mit ihrer schwalbenschwanzförmigen Ausbuchtung 48 links und rechts der Arme 22 zur Anlage kommen. Auf Grund der abgeschrägten Enden der Platte 46 wird die Filterplatte 20 nicht nur für den nachfolgenden Schabevorgang fixiert, sondern gleichzeitig zentriert.

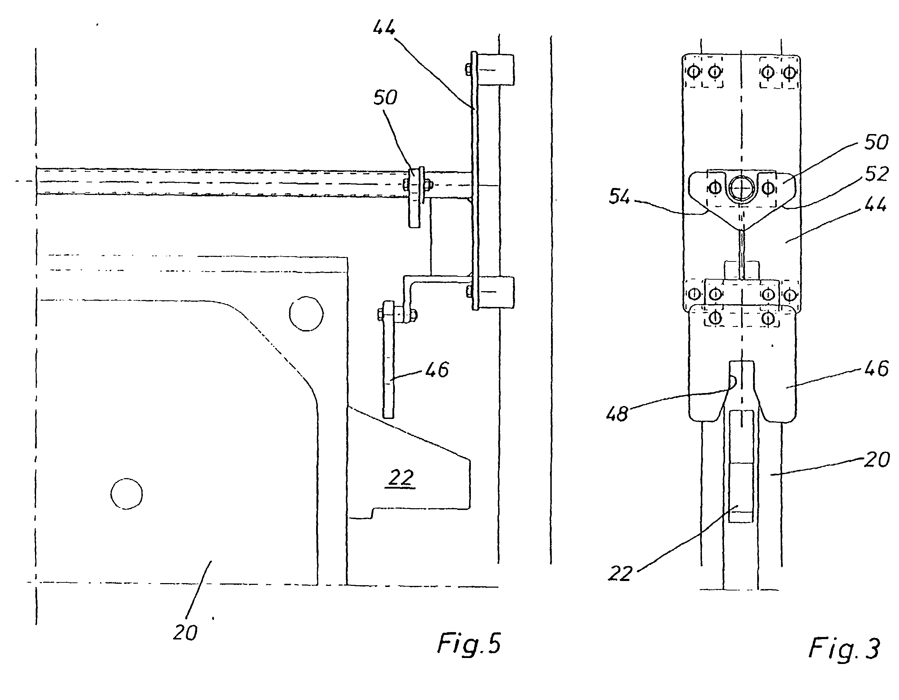

Zusätzlich zur Platte 46 sitzt auch der Keil 50 (siehe Fig. 3, Fig. 5) auf der Kulisse 44, weshalb beide gleichzeitig nach unten und oben bewegt werden. Mit dem Auftreffen der Keilflächen 52, 54 auf den Spreizbügeln 56, 58 weichen die gegen Federkraft gehaltenen Spreizbügel 56, 58 zur Seite aus und öffnen damit Taschen 60, 62, die von der Filterplatte und den Rückseiten der Filtertücher 63 begrenzt sind.

Befestigt sind die Filtertücher an ihrem oberen Ende an den Querstegen 64, 66 der zur Spreizvorrichtung gehörenden Schenkel 68, 70, die sich über die gesamte Breite der Filterplatte erstrecken durch Laschen, die die Filtertücher an ihren Enden selbst bilden oder durch punktuelle Verbindung über Ösen in den Filtertüchern.

Jeder der Schenkel 68, 70 schwenkt um eine Achse, die außerhalb der Längsmittelebene der Filterplatte sitzt. Die beiden Schenkel 68, 70 sind kreuzweise gelagert und durch einen Anschlag in ihrem Hub begrenzt. Die erzwungene Spreizung der Spreizbügel ist erforderlich, da die einzelnen Spreizbügel 56, 58 im Normalfall nur unter der Belastung der Filtertücher mit einem Filterkuchen zur Seite kippen. Häufig fällt der Filterkuchen oder Teile von ihm jedoch bereits während des Transports der Filterplatten 20 zur Kuchenabschabevorrichtung vom Filtertuch ab. Zur Konstanthaltung des Abstands der Filtertücher 63 von den Filterplatten 20 und damit der Bildung der Taschen 60, 62 beim Abschaben muß deshalb der Keil 50 die Spreizbügel 56, 58 in gespreizter Lage sichern.

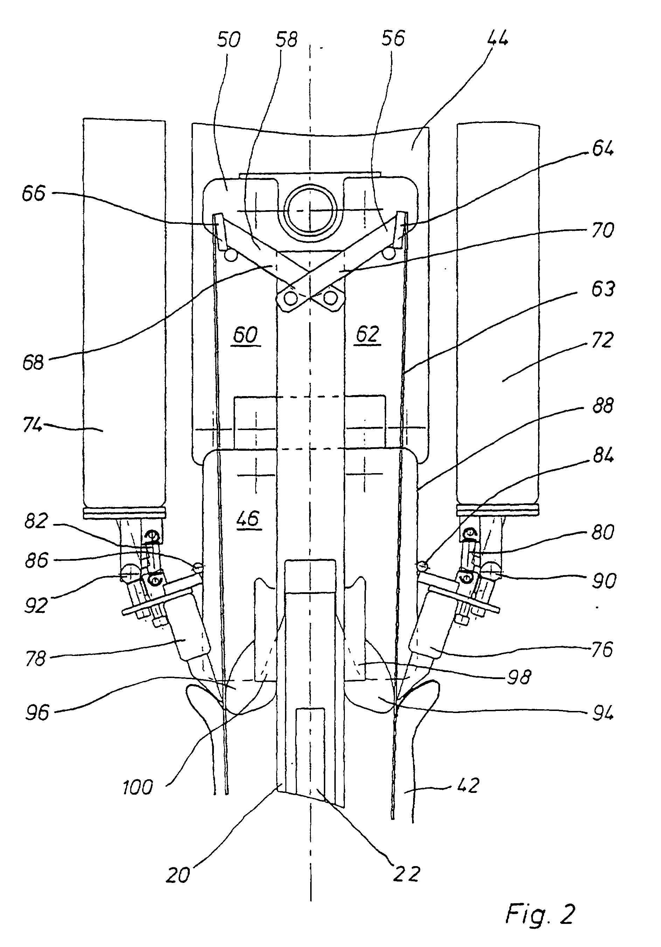

Nachdem die Spreizbügel 56, 58 durch den Keil 50 mechanisch verriegelt sind, (siehe Fig. 2) beginnt der Reinigungsvorgang des Filtertuchs 63. Dazu fährt der Schabrahmen 71, der einen eigenen Antrieb hat oder mechanisch mit dem der Kulisse 44 gekoppelt ist, nach unten in den Bereich der Filterplatte 20 ein. An den Enden der beiden äußeren Arme 72, 74 des Schabrahmens sitzen die Schaber 76, 78, die gegen die Kraft von Federn 80, 82 nach außen vom Filtertuch 63 weggerichtet sind. Erst beim Auffahren der Rollen 84, 86 auf die Führung 88 kippt der über ein Gelenk 90, 92 mit dem Schabrahmen verbundene Schaber 76, 78 in Arbeitsstellung.

In dieser Arbeitsstellung liegt die Spitze des Schabers 76, 78 am Gegenhalter 94, 96 an. Positioniert und gehalten wird der Gegenhalter 94, 96 an der parallel zum Schabrahmen angeordneten Führung 98, 100. Das bedeutet, daß der Gegenhalter 94, 96 stets am Schaber 76, 78 anliegt und mit gleicher Geschwindigkeit auf- und abwärts bewegt wird.

Die Gestaltung der Schaberspitze kann von der Filterkuchenkonsistenz abhängig sein. Im Ausführungsbeispiel ist sie spitzkeilförmig mit einem Freiwinkel von bis zu annähernd 20° gewählt. Des weiteren kann die Form des Gegenhalters sehr wohl von der Filterkuchenkonsistenz oder dem Filterkuchenmaterial abhängig sein. In der bevorzugten und dargestellten Form ist der Gegenhalter 94, 96 im Querschnitt tropfen- bis eiförmig. Die Schaberansatzlinie liegt bis zu 15° vor oder nach dem Radiusgipfel des Gegenhalters in Richtung zum Filtertuch. Möglicherweise kommen jedoch auch Gegenhalter mit Vorsprüngen oder speziellen Einbuchtungen zum Einsatz, die ein verbessertes Ablöseverhalten bei stark haftenden Filterkuchen zeigen. Trotz der möglicherweise unsymmetrischen Belastung der beiden Schaber infolge bereits abgefallener Filterkuchen oder Filterkuchenteile bleibt die Filterplatte 20 aufgrund der Unterstützung durch die Platte 46 und deren Ausbuchtung 48 in ihrer normalerweise senkrechten stabilen Lage.

Die Länge der Gabelöffnung für den Schabrahmen ist mindestens so lang wie die Länge des zu reinigenden Filtertuchs. Beim vorgenannten Erfindungsbeispiel werden die Filterkuchen 42 oder deren Rest jeweils von einer Filterplatte abgeschabt. Ebenso kann dieses Prinzip durch eine geringfügig abgewandelte Vorrichtung natürlich die benachbarten Seiten zweier Filterplatten bearbeiten. Außerdem läßt sich die Kuchenabschabevorrichtung ohne eigenen Antrieb zusammen mit der Filterplattentransportvorrichtung betätigen.

In der besonderen, jedoch nicht dargestellten Ausführung der Erfindung kommen Filterplatten zum Einsatz, deren Trübezulauf außerhalb der aktiven Filterfläche sitzt, in diesem speziellen Fall unterhalb. Dabei ist das Filtertuch der Vorderseite mit dem der Rückseite über den Trübezulauf von einem Steg an beiden Tuchseiten verbunden. Spreizt die Spreizvorrichtung die Filtertücher von der Filterplatte ab, so senkt sich das Filtertuch und bildet im untersten Bereich eine nach unten gewölbte Tasche. Damit gewinnt das Filtertuch auch im untersten Bereich so viel Abstand von der Filterplatte, daß der Gegenhalter einfahren kann und eine Reinigung des Filtertuchs über die gesamte wirksame Filteroberfläche des Filtertuchs hinweg erreicht.

## Patentansprüche

1. Filterpresse mit mehreren zwischen den Pressenhäuptern senkrecht angeordneten Filterplatten und vorzugsweise paarweise, zwischen den Filterplatten angeordneten Filtertüchern, die mit Spreizvorrichtungen in Verbindung stehen, die die Filtertücher während des Entleerungsvorgangs von der Filterplatte abspreizen,
**dadurch gekennzeichnet,**
**daß** dem auf- und abwärts bewegbaren Schaber (76, 78), der den Filterkuchen (42) vom Filtertuch (63) entfernt, auf der gegenüberliegenden Seite des Filtertuchs (63) ein mit gleicher Geschwindigkeit bewegbarer Gegenhalter (94,96) zugeordnet ist.

2. Filterpresse nach Anspruch 1,
**dadurch gekennzeichnet,**
**daß** der Schaber (76, 78) und der Gegenhalter (94, 96) an einem Schabrahmen (71) sitzen, der sich quer zur Längsachse des Filterplattenpakets (28) spannt.

3. Filterpresse nach Anspruch 1 oder 2,
**dadurch gekennzeichnet,**
**daß** der Gegenhalter (94,96) eine konvexe Oberfläche aufweist.

4. Filterpresse nach einem der vorhergehenden Ansprüche,
**dadurch gekennzeichnet,**
**daß** der Schaber (76, 78) über eine Feder (80, 82) mit dem Schabrahmen verbunden ist.

5. Filterpresse nach einem der Ansprüche 1 bis 4,
**dadurch gekennzeichnet,**
**daß** der Gegenhalter (94, 96) im Berührungsbereich des Schabers (76, 78) einen Rücksprung bildet.

6. Filterpresse nach einem der vorhergehenden Ansprüche,
**dadurch gekennzeichnet,**
**daß** der Schaber (76, 78) am Gegenhalter (94,96) um bis zu 15° vor oder hinter dessen Radiusgipfel anliegt.

7. Filterpresse nach einem der vorhergehenden Ansprüche,
**dadurch gekennzeichnet,**
**daß** die Spreizbügel (56, 58) der Spreizvorrichtung am unteren Ende der Filterplatte (20) sitzen und die Schaber (76, 78) und die Gegenhalter (94, 96) seitlich neben der Filterplatte angeordnet sind.

8. Filterpresse nach einem der vorhergehenden Ansprüche,
**dadurch gekennzeichnet,**
**daß** die Länge der Gabelöffnung des Schabrahmens mindestens so groß ist wie die freie Länge des zu reinigenden Filtertuchs.

9. Filterpresse nach einem der vorhergehenden Ansprüche,
**dadurch gekennzeichnet,**
**daß** eine heb- und senkbare Kulisse (44) vorgesehen ist, die einen Keil (50) zur Betätigung der Spreizbügel (56, 58) und eine Platte mit einer schwalbenschwanzförmigen Ausbuchtung zur Fixierung der Arme (22) der Filterplatten (20) aufweist.

## Claims

1. Filter press including a plurality of filter plates disposed vertically between the press heads as well as filter cloths disposed, preferably in pairs, between said filter plates, which filter cloths are connected to spreading devices that spread said filter cloths away from said filter plate during the discharging operation,
**characterised in**
**that** a scraper (76, 78) mobile upwards and downwards and serving to remove the filter cake (42) from said filter cloth (63) is provided, which a holding pad (94, 96) mobile at the same speed is associated with, which holding pad is disposed on the opposite side of said filter cloth (63).

2. Filter press according to Claim 1,
**characterised in**
**that** said scraper (76, 78) and said holding pad (94, 96) are located on a scraping frame (71) extending across the longitudinal axis of the package of filter plates (28).

3. Filter press according to Claim 1 or 2,
**characterised in**
**that** said holding pad (94, 96) has a convex surface.

4. Filter press according to any of the preceding Claims,
**characterised in**
**that** said scraper (76, 78) is connected via a spring (80, 82) to said scraping frame.

5. Filter press according to any of the Claims 1 to 4,
**characterised in**
**that** said holding pad (94, 96) forms a recessed shoulder in the contact zone of said scraper (76, 78).

6. Filter press according to any of the preceding Claims,
**characterised in**
**that** said scraper (76, 78) bears against said holding pad (94, 96) by up to 15° in front of or behind the radius apex thereof.

7. Filter press according to any of the preceding Claims,
**characterised in**
**that** said spreading straps (56, 65) of said spreading device are located on the lower end of said filter plate and that said scraper (76, 78) and said holding pad (94, 96) are disposed beside said filter plate.

8. Filter press according to any of the preceding Claims,
**characterised in**
**that** the length of the bifurcation opening of said scraping frame is at least as long as the free length of the filter cloth to be cleaned.

9. Filter press according to any of the preceding Claims,
**characterised in**
**that** a connecting link (44) adapted to be lifted and lowered is provided that presents a wedge (50) for operating said spreading straps (56, 58) and a plate with a dovetailed bulge for fixing the arms (22) of said filter plates (20).

## Revendications

1. Filtre-presse comprenant une pluralité de plaques de filtre-presse disposées en sens vertical entre les têtes de filtre-presse, ainsi que des tissus filtrant disposés, de préférence en paires, entre lesdites plaques de filtre-presse, lesdits tissus filtrant étant reliés aux dispositifs écarteurs, qui écartent lesdits tissus filtrant de ladite plaque de filtre-presse au cours de l'opération de décharge,
**caractérisé en ce**
**qu'**un racloir (76, 78) mobile en haut et en bas, qui sert à enlever le gâteau de filtre-presse (42) dudit tissu filtrant (63), est disposé, auquel est affecté un fond de support (94, 96) mobile à la même vitesse, ce fond de support étant disposé du côté opposé dudit tissu filtrant (63).

2. Filtre-presse selon la revendication 1,
**caractérisé en ce**
**que** ledit racloir (76, 78) et ledit fond de support (94, 96) sont positionnés sur un cadre de racloir (71), qui s'étend à travers l'axe longitudinal du paquet à plaques de filtre-presse (28).

3. Filtre-presse selon la revendication 1 ou 2,
**caractérisé en ce**
**que** ledit fond de support (94, 96) a une surface convexe.

4. Filtre-presse selon une quelconque des revendications précédentes,
**caractérisé en ce**
**que** ledit racloir (76, 78) est relié, via un ressort (80, 82), audit cadre de racloir.

5. Filtre-presse selon une quelconque des revendications 1 à 4,
**caractérisé en ce**
**que** ledit fond de support (94, 96) forme un retrait dans la zone de contact dudit racloir (76, 78).

6. Filtre-presse selon une quelconque des revendications précédentes,
**caractérisé en ce**
**que** ledit racloir (76, 78) porte contre ledit fond de support (94, 96) par jusqu'à 15° devant ou derrière le sommet de rayon du dernier.

7. Filtre-presse selon une quelconque des revendications précédentes,
**caractérisé en ce**
**que** lesdites traverses à expansion (56, 65) dudit dispositif écarteur sont disposées à l'extrémité inférieure de ladite plaque de filtre-presse, et en ce que ledit racloir (76, 78) et ledit fond de support (94, 96) sont disposés du côté de ladite plaque de filtre-presse.

8. Filtre-presse selon une quelconque des revendications précédentes,
**caractérisé en ce**
**que** la longueur de l'ouverture fourchue dudit cadre de racloir correspond au moins à la longueur en saillie du tissu filtrant à nettoyer.

9. Filtre-presse selon une quelconque des revendications précédentes,
**caractérisé en ce**
**qu'**une coulisse (44) apte à monter et descendre est disposée, qui présente un coin (50) à commander lesdites traverses à expansion (56, 58) et une plaque à une courbure en queue d'aronde à fixer les bras (22) desdites plaques de filtre-presse (20).
